# EUROPÄISCHE PATENTANMELDUNG

(11) **EP 2 106 699 A1**
(43) Veröffentlichungstag der Anmeldung: **07.10.2009**
(21) Anmeldenummer: 09004965.1
(22) Anmeldetag: 03.04.2009
(51) Int. Cl.: A01P 1/00, A01N 59/00

(54) **Wässrige Lösung zur Oxidation, Entkeimung und Desodorierung sowie Verfahren zur Herstellung dieser Lösung**

(30) Priorität: 05.04.2008 DE 102008017379
(71) Anmelder: Cealin Chemische Fabrik GmbH, 31157 Sarstedt (DE)
(72) Erfinder: Lehmann, Susanne, Dr., 31157 Sarstedt (DE)
(74) Vertreter: König, Norbert

(57) **Zusammenfassung**

Die Erfindung betrifft eine wässrige Lösung zur Oxidation, Entkeimung und Desodorierung mit einem Gehalt an Natriumhypochlorit und/oder Magnesiumhypochlorit und/oder Kalziumhypochlorit, welche zusätzlich die Chlorsauerstoffsäuren HClO₂ und/oder HClO₃ und/oder HClO₄ und die Salze dieser Chlorsauerstoffsäuren und zusätzlich ein anorganisches Silikatgemisch enthält. Das zusätzliche Gemisch ist vorzugsweise ein anorganisches Silikatgemisch eines Alkali- oder Erdalkalimetalls.

## Beschreibung

Die Erfindung betrifft eine wässrige Lösung zur Oxidation, Entkeimung und Desodorierung gemäß Oberbegriff des Anspruchs 1 sowie ein Verfahren zur Herstellung einer solchen wässrigen Lösung.

Durch die EP 0 423 137 B1 ist eine derartige wässrige Lösung zur Oxidation, Entkeimung und Desodorierung mit einem Gehalt an Natriumhypochlorit und/oder Magnesiumhypochlorit und/oder Kalziumhypochlorit bekannt. Diese bekannte Lösung zeichnet sich dadurch aus, dass sie zusätzlich die Chlorsauerstoffsäuren HClO₂, HClO₃ und/oder HClO₄ und/oder die Salze dieser Chlorsauerstoffsäure enthält. Bei dem aus der EP 0 423 137 B1 bekannten Verfahren zur Herstellung der wässrigen Lösung wird der wässrigen Natriumhypochloritlösung und/oder Magnesiumhypochloritlösung und/oder Kalizumhypochloritlösung 0,1 bis 50 Gew.-% der Chlorsauerstoffsäuren und/oder deren Salze unter Rühren zugegeben. Der Vorteil der bekannten Lösung besteht darin, dass Zwischenverbindungen zwischen dem Chlor dieser Lösung mit Bestandteilen beispielsweise des zu behandelnden Wassers nicht mehr entstehen. Es steht nur freies wirksames Chlor zur Verfügung, so dass kürzere Entkeimungszeiten bei wesentlich geringeren Einsatzmengen erreicht werden. Die bekannte wässrige Lösung kann im gesamten pH-Bereich ohne Einschränkung eingesetzt werden. Verbesserungsbedarf besteht noch hinsichtlich der Lagerstabilität der Lösung. Bekanntlich zeigen auch stabilisierte Lösungen der genannten Art innerhalb relativ kurzer Zeit durch Wärme- und Kälteeinwirkung oder durch Einbringung durch Energie erhebliche Einbußen an Wirkstoff durch Zersetzung. Hierdurch wird die Effizienz des Reaktionspotentials und auch die Wirtschaftlichkeit dieser Lösungen deutlich reduziert.

Die Aufgabe der vorliegenden Erfindung besteht deshalb darin, die bekannte wässrige Lösung zur Oxidation, Entkeimung und Desodorierung dahingehend weiter zu bilden, dass eine Langzeitstabilisierung der Lösung erreicht wird.

Diese Aufgabe wird durch die Merkmale des Anspruchs 1 gelöst.

Vorteilhafte und zweckmäßige Weiterbildungen der Aufgabenlösung sind in den Unteransprüchen angegeben.

Ein Verfahren zur Herstellung dieser Lösung ist im Anspruch 3 angegeben.

Die Erfindung schlägt vor, zu der aus der EP 0 423 137 B1 bekannten Chordioxidlösung ein anorganisches Silikatgemisch zuzugeben. Es hat sich dabei überraschenderweise gezeigt, dass eine beachtlich langzeitstabile Lösung erhalten wird, die für mindestens sechs Monate und länger bei geringen Wirkstoffverlusten haltbar ist. Durch die Silikatgemisch - Zugabe wird bei einer Reaktionszeit von weniger als 5 Minuten eine Pufferwirkung des pH-Wertes erreicht, wodurch eine langzeitstabile Chlordioxidlösung erhalten wird.

Vorzugsweise ist das anorganische Silikatgemisch ein Silikatgemisch eines Alkali- oder Erdalkalimetalls.

Die Zugabe des Silikatgemisches erfolgt in einer Menge von 0,01 bis 120g/l (bezogen auf das wasserfreie Produkt).

Anhand eines Beispiels soll die Herstellung der erfindungsgemäßen Chlordioxidlösung beschrieben werden.

In eine Natriumhypochloritlösung mit 15 bis 20 Gew.-% Chlor werden bezogen auf diese Lösung 10 Gew.-% einer 20 Gew.-%igen Lösung von HClO₂ und HClO₄ in Kombination mit 0,01 bis 120 g/l (bezogen auf das wasserfreie Produkt) Silikatgemisch unter gleichmäßigem Rühren hinzu gegeben. Das Rühren erfolgt dabei mit ca. 500 Umdrehungen pro Minute bei Raumtemperatur (20°C bis 25°C), wobei die unter Rühren durchgeführte Zugabe in einem abgeschlossenen Behälter erfolgt.

Die folgende grafische Darstellung zeigt den Wirkstoffverlust über eine Lagerzeit von 180 Tagen für die bisher hergestellte und eingesetzte Chlordioxidlösung (Kurve B) und für die erfindungsgemäße Chlordioxidlösung (Kurve A). Nach 180 Tagen Lagerzeit zeigt die erfindungsgemäße Chlordioxidlösung einen Wirkstoffverlust von ca. 20%, während der Wirkstoffverlust der bisher verwendeten Chlordioxidlösung fast 60% beträgt. Die erfindungsgemäße Chlordioxidlösung ist bei üblichen Lagertemperaturen zwischen -5°C und +35°C mindestens sechs Monate haltbar, ohne dass beachtenswerte Wirkstoffverluste auftreten. Die erfindungsgemäße Lösung ist daher für eine Langzeitlagerung sehr gut geeignet.

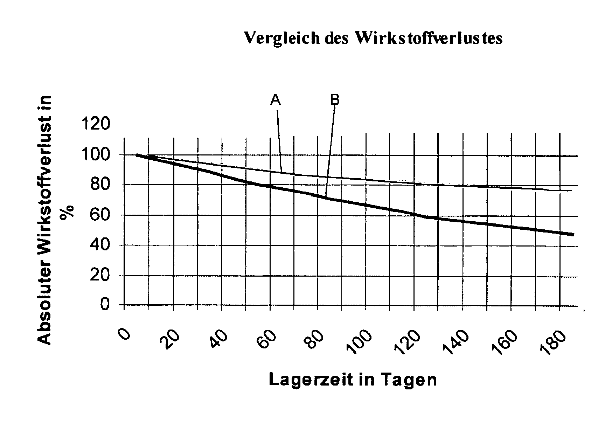

## Patentansprüche

1. Wässrige Lösung zur Oxidation, Entkeimung und Desodorierung mit einem Gehalt an Natriumhypochlorit und/oder Magnesiumhypochlorit und/oder Kalziumhypochlorit, welche zusätzlich die Chlorsauerstoffsäuren HClO₂ und/oder HClO₃ und/oder HClO₄ und die Salze dieser Chlorsauerstoffsäuren enthält, **dadurch gekennzeichnet, dass** sie zusätzlich ein anorganisches Silikatgemisch enthält.

2. Wässrige Lösung nach Anspruch 1, **dadurch gekennzeichnet, dass** das zusätzliche Gemisch ein anorganisches Silikatgemisch eines Alkali- oder Erdalkalimetalls ist.

3. Wässrige Lösung nach Anspruch 1 oder 2, **dadurch gekennzeichnet, dass** sie 15 bis 20 Gew.-% Chlor, 10 Gew.-% einer 20 Gew.-%-igen Lösung von HClO₂ und HClO₄ und 0,01 - 120 g/l (bezogen auf das wasserfreie Produkt) Silikatgemisch enthält.

4. Verfahren zur Herstellung einer wässrigen Lösung zur Oxidation, Entkeimung und Desodorierung nach Anspruch 1, 2 oder 3, **dadurch gekennzeichnet, dass** in die wässrige Natriumhypochloritlösung und/oder Magnesiumhypochloritlösung und/oder Kalizumhypochloritlösung mit 15 bis 20 Gew.-% Chlor 10 Gew.-% einer 20 Gew.-%igen Lösung von HClO₂ und HClO₄ in Kombination mit 0,01 - 120 g/l (bezogen auf das wasserfreie Produkt) Silikatgemisch unter Rühren eingegeben werden.

5. Verfahren nach Anspruch 4, **dadurch gekennzeichnet, dass** das Silikatgemisch ein Silikatgemisch eines Alkali- oder Erdalkalimetalls ist.

6. Verfahren nach Anspruch 4, **dadurch gekennzeichnet, dass** das Rühren gleichmäßig mit 500 Umdrehungen pro Minute bei Raumtemperatur (20°C bis 25°C) erfolgt.

7. Verfahren nach Anspruch 5, **dadurch gekennzeichnet, dass** die unter Rühren durchgeführte Zugabe in einem abgeschlossenen Behälter erfolgt.
